(19) Europäisches Patentamt
European Patent Office
Office européen des brevets

(11) EP 0 776 868 B1

(12) EUROPEAN PATENT SPECIFICATION

(45) Date of publication and mention
of the grant of the patent:
**15.09.1999 Bulletin 1999/37**

(51) Int Cl.⁶: **C03C 8/14**, C03C 17/00,
H01B 1/14, H01C 17/065,
H01J 29/62

(21) Application number: **96119038.6**

(22) Date of filing: **28.11.1996**

(54) **Resistor for cathode ray tube and method of preparing same**

Widerstand für Kathodenstrahlrohr und Verfahren zu dessen Herstellung

Résistance pour tube à rayons cathodique et méthode pour sa production

(84) Designated Contracting States:
**DE**

(30) Priority: **28.11.1995 JP 30928295**
**26.02.1996 JP 3770196**

(43) Date of publication of application:
**04.06.1997 Bulletin 1997/23**

(73) Proprietor: **MATSUSHITA ELECTRIC INDUSTRIAL CO., LTD**
**Kadoma-shi, Osaka 571-0000 (JP)**

(72) Inventors:
• **Aoki, Masaki**
**Minoo-shi, Osaka 562 (JP)**
• **Ohtani, Mitsuhiro**
**Sakai-shi, Osaka 591 (JP)**
• **Yamashita, Katuyoshi**
**Katano-shi, Osaka 576 (JP)**
• **Hiratani, Tatuo**
**Ikoma-shi, Nara 630-01 (JP)**
• **Murai, Ryuichi**
**Toyonaka-shi, Osaka 565 (JP)**

• **Kudoh, Masatoshi**
**Hirataka-shi, Osaka 573 (JP)**
• **Ohmae, Hideharu**
**Toyonaka-shi, Osaka 560 (JP)**
• **Konda, Masahiko**
**Ibaraki-shi, Osaka 567 (JP)**
• **Inoue, Mamoru**
**Kusatsu-shi, Shiga 525 (JP)**

(74) Representative: **Eisenführ, Speiser & Partner**
**Martinistrasse 24**
**28195 Bremen (DE)**

(56) References cited:
EP-A- 0 197 584    EP-A- 0 513 909
US-A- 4 101 708    US-A- 4 574 055
US-A- 4 961 022    US-A- 4 961 023
US-A- 5 021 194

Remarks:
The file contains technical information submitted after the application was filed and not included in this specification

**Description**

BACKGROUND OF THE INVENTION

(Field of the Invention)

The present invention relates to a method of preparing a resistor for cathode ray tube, for example a projection television display tube.

(Description of the Prior Art)

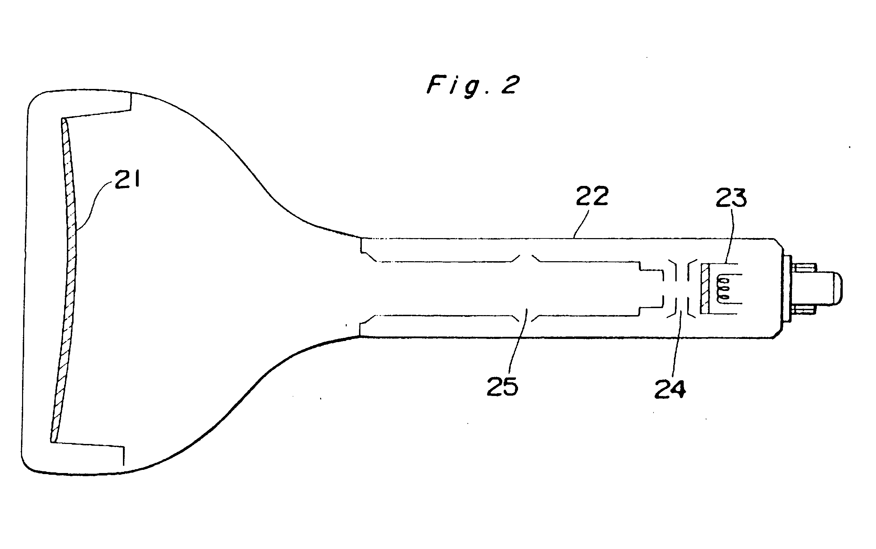

Referring now to Fig. 2, there is schematically shown a conventional cathode ray tube comprising a sealed glass envelope evacuated to a substantial vacuum. The glass envelope includes a generally cylindrical neck 22 having one end closed and the other end flared outwardly to define a cone which is in turn continued to a faceplate 21. The illustrated cathode ray tube also comprises a cathode 23, an electron gun made up of one or more electronic lens elements, all of which are accommodated within the neck 22. The electron gun shown therein is in the form of a triode electron gun including a triode portion 24 and a main electronic lens portion 25 made of metal cylinder, wherein electron beams discharged from the cathode 23 can be led through the main electron lens portion 25 to form a crossover image on the faceplate 21. In such electron lens system, a spot formed on the faceplate has a diameter Ds calculated according to the following formula (1):

$$Ds=[M \cdot dx+(1/2)M \cdot Cso \cdot \alpha^3)^2+Dsc^2]^{1/2}$$

wherein dx: virtual crossover diameter, $\alpha_0$: divergence angle, Dsc: spreading component of beam caused by repulsion effect of space charge.

Recently, a lot of trials have been made to get a high precision image by making the coefficient of spherical aberration Cs of the main electron lens small and thus achieving a small diameter Ds. Among them, there has been proposed a method wherein instead of the conventional main electron lens comprising plural metal cylinders as the focussing electrode, a new focussing electrode made of a helical resistance element is mounted within the neck of the cathode ray tube as shown in Japanese Patent Publications (unexamined) Nos. Sho 60-208027 and Hei 2-276138.

According to the conventional method as shown in Japanese Patent Publication No. Sho 61-224402, the helical resistance body can be prepared by dipping a glass tube made of Pb glass material having a softening point of 640 °C into a stable binder-free slurry containing ruthenium hydroxide and glass particles to form an inner coating layer on the glass tube, and then mechanically processing the coating layer in a helical shape after drying, and finally sintering the helical layer to obtain a ruthenium oxide-containing resistance layer.

However, as the conventional method uses a binder-free suspension containing $Ru(OH)_2$ and glass particles having a low melting temperature during the sintering step which is carried out at 400 to 600 °C, $Ru(OH)_2$ is thermally decomposed and produces $RuO_2$. At same time, the glass particles are softened, so that the resulting resistance layer comprises very fine $RuO_2$ particles which have a size of 0.01 to 0.03 $\mu$m and are crystallized around the glass particles. If a high resistance value of 10 G$\Omega$ (corresponding to a sheet resistivity of 1 M$\Omega/\square$) would be required, the problem occurs that the sintering temperature dependency of the resistance value is increased, that is, a small change in the sintering temperature causes a large change of the resistance value and thus the temperature coefficient of resistance (TCR) increases.

On the other hand, there is provided another method for preparing the resistance layer from $RuO_2$ and glass particles as shown in Japanese Patent No. Sho 55-14627. However, the resulting $RuO_2$-Glass resistance layer is used for a potential divider and is prepared on a substrate of $Al_2O_3$ by a screen printing. There are some problems that the total resistance value reaches only to 300 to 1000 M$\Omega$ and a relatively high sintering temperature of 750 to 850 °C is needed to prepare a high reliable resistor against a high voltage of about 30 KV and an electron ray because of using an alumina substrate (Heat expansion coefficient: $75 \times 10^{-7}$ /°C; Melting point: 2050 °C) and the glass component in the resulting glaze resistor having a high melting point. Therefore, such a method can not apply to preparation of the resistance layer on the glass tube in the cathode ray tube because the glass tube is made of a low melting point glass material.

EP-A1 0 513 909 discloses an electron-optical device comprising a cathode-ray tube having a cylindrical neck of a very small external diameter, particularly $\leq$ 15 mm, whose inner surface carries a multi-element layer electrode such as a helical structure formed from a high-ohmic resistance material, which structure constitutes a focusing lens. In combination with a deflection system having a correspondingly small diameter, very high scanning frequencies can be realised.

US-Patent 4 961 022 describes a display tube comprising an electron gun having a beam-shaping part and a focusing structure. The focusing structure comprises an elongate hollow structure with a high-ohmic resistive layer provided on the inner and/or outer surface and comprises means for forming a non-rotationally symmetrical lens element in the area of the focusing structure. This may be a structure generating an electric multipole (for example, dipole or quadrupole) which may be incorporated particularly in the high-ohmic resistive layer.

US-Patent 4 961 023 relates to a cathode ray tube having an electron gun which comprises a beam-shaping part and a focusing structure, which structure comprises a hollow tube with a helical electrically conducting glass-enamel layer on the inner surface. Together with the hollow tube, the components of the beam-shaping part are secured to axial mounting rods via metal supporting elements. The tube has a first and a second end face each of which is fixedly connected in one embodiment to a metal plate having a coaxial opening provided with a flange, which flange projects into the tube and is fused in an electrically conducting manner to the electrically conducting glass-enamel layer of the focusing structure.

US-Patent 5 021 194 discloses a thermal head obtained by calcining a mixed material comprising at least ruthenium oxide particles having a specific surface area of 10 to 40 $m^2$/g and a particle size of 1 $\mu$m as the upper limit value of the particle size distribution. Glass fine particles and a dispersant which disperses these fine values and disappears by calcining can reduce scattering of resistance values and give high image quality at thermal printing.

US-Patent 4 574 055 relates to a resistor composition comprising conductive particles, a glass frit and a vehicle in which $RuO_2$ particles coated with a polynary oxide of Bi and/or Pb and Ru are employed and, by using the surface-coated $RuO_2$, the composition can provide readily an improved resistor having an advantageous combination of properties, particularly a small absolute TCR and high voltage stability throughout a wide resistance range. The produced resistor can be successfully laser-trimmed without adversely affecting the properties thereof.

US-Patent 4 101 708 describes resistor compositions of inorganic powders dispersed in an inert vehicle for making film resistors on dielectric substrates. The powders comprise certain proportions of $RuO_2$, PbO-containing glass, $Nb_2O_5$ and, optionally, $CaF_2$. Also sintered resistors thereof adherent to such substrates.

It is the object of the present invention to overcome the above explained prior art disadvantages and to provide a sintering method for preparing a high resistance layer on a glass tube having a low melting temperature and being intended for use in a cathode ray tube, which method leads to a high resistance layer that shows a low resistance dependency on the sintering temperature, while being stable against high voltage and showing a stable load characteristic.

This object is attained by the methods according to claims 1 and 7. Suitable and preferred embodiments of the methods are defined in the respective subclaims.

SUMMARY OF THE INVENTION

After deep going research made by the inventors, it was found that an optimization of the composition and of the particle sizes of the resistance layer components leads to a more reliable resistance layer at a high region of 10 G$\Omega$ (corresponding to a sheet resistivity of 1 M$\Omega$/$\square$), provided with less dependency on the sintering temperature, more stability against the high voltage, a stable load characteristic and a less temperature characteristic of the resistance value. That is, provided that the resistance layer contains a small ratio such as 1 to 15% by weight of the $RuO_2$ component, the $RuO_2$ particles have a relatively large size of 0.05 to 0.4 $\mu$m, and the glass particles have a small size of 0.01 to 2.0 $\mu$m, the desired high sheet resistivity of 1 M$\Omega$/$\square$ and low TCR can be always obtained even if the sintering step of the resistance layer would be carried out at a low temperature of around 500 °C. Further, a good short-time overload of ± 2 % or less and a low TCR of ± 450 ppm/°C or less can be obtained, provided that the glass composition and the sintering condition are optimized.

Accordingly, from a first aspect of the present invention there is provided a method of preparing a resistor for cathode ray tube which comprises steps of claim 1.

The resulting $RuO_2$-glass glaze resistor has a structure after sintering wherein $RuO_2$ particles are dispersed in a network of glass particles, for example as shown in Journal of American Ceramic Society, 73 vol. No.7 (1990) page 1953.

The glass composition may be adjusted to fit a coefficient of thermal expansion to that of the glass tube, the preferred examples are shown as follows.

　　　1) 67 to 95 wt. % of PbO, 2 to 15 wt. % of $SiO_2$ and 3 to 19 wt. % of $B_2O_3$.
　　　2) 69 to 90 wt.% of PbO, 2 to 20 wt.% of ZnO and 5 to 15 wt.% of $B_2O_3$.
　　　3) 40 to 52 wt.% of $P_2O_5$, 34 to 56 wt.% of ZnO and 4 to 14 wt.% of $Al_2O_3$.
　　　4) 15 to 30 wt.% of ZnO, 5 to 25 wt. % of $B_2O_3$ and 50 to 75 wt.% of $V_2O_5$.
　　　5) 69 to 92 wt. % of PbO, 2 to 10 wt. % of $SiO_2$, 2 to 20 wt. % of $B_2O_3$, 1 to 5 wt.% of $Al_2O_3$, and 2 to 5 wt.% of ZnO.

On the other hand, considering a low temperature sintering step according to the present invention, the glass tube has preferably a glass transition point Tg of 600 °C or less. The typical compositions of the glass tube is shown as follows.

1) $PbO_2$ 28 wt. %, $SiO_2$ 60 wt. %, $Al_2O_3$ 1 wt. %, $Na_2O$ 8 wt. %, $K_2O$ 3 wt. %
2) $SiO_2$ 72 wt.%, $Al_2O_3$ 7 wt.%, $B_2O_3$ 10.5 wt.%, BaO 3 wt.%,

$Na_2O$ 7.5 wt. %.

In addition to the above composition, metal oxide particles may be added. Therefore, according to a second aspect of the present invention there is provided a method of preparing a resistor for cathode ray tube which comprises steps of claim 7.

In a preferred embodiment according to the second invention, the glass powder may comprises:

1) 69 to 92 wt.% of PbO, 2 to 10 wt. % of $SiO_2$, 2 to 20 wt. % of BO, 1 to 5 wt. % of $Al_2O_3$, and 2 to 5 wt.% of ZnO.
2) 67 to 95 wt. % of PbO, 2 to 15 wt. % of $SiO_2$ and 3 to 19 wt. % of $B_2O_3$.

In a preferred embodiment, the metal oxide powder may be at least one selected from the group consisting of $TiO_2$, $ZrO_2$, ZnO, $SiO_2$ and $Al_2O_3$.

BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:

Fig. 1 is a vertical sectional view of a cathode ray tube according to an embodiment of the present invention;
Fig. 2 is a vertical sectional view of a conventional cathode ray tube;
Fig. 3 is a graph showing comparative data concerning the resistance value dependency on the sintering temperature in resistance layers prepared by the present invention and the conventional method.

DETAILED DESCRIPTION OF THE EMBODIMENTS

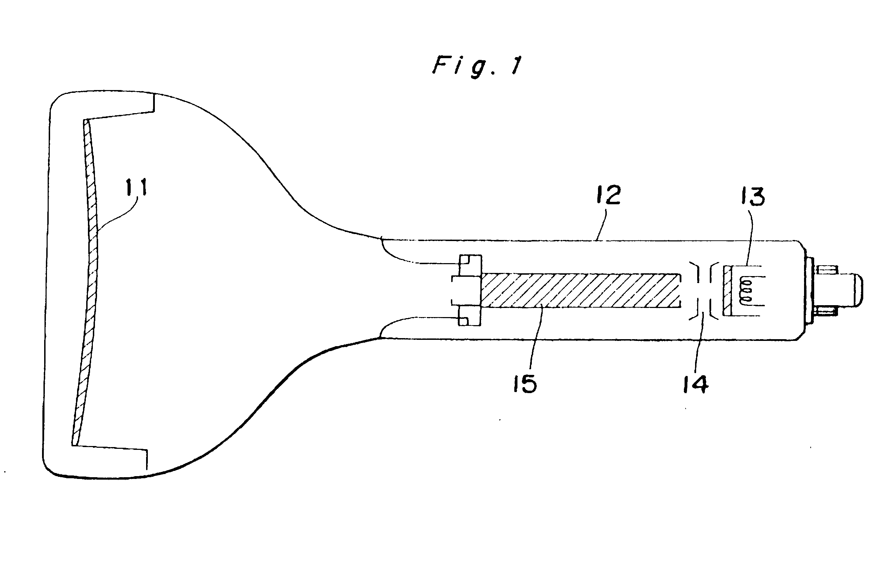

Referring now to Fig. 1, there is schematically shown a cathode ray tube comprising a sealed glass envelope evacuated to a substantial vacuum. The glass envelope includes a generally cylindrical neck 12 having one end closed and the other end flared outwardly to define a cone which is in turn continued to a faceplate 11. The illustrated cathode ray tube also comprises a cathode 13, an electron gun made up of one or more electronic lens elements, all of which are accommodated within the neck 12. The electron gun shown therein is in the form of a triode electron gun including a triode 14 and a focusing electrode 15. The focusing electrode 15 is formed by the use of a spiral resistance element.

Example 1

A glass tube for the focusing electrode 15 to be accommodated within the neck 12 of the glass envelope, 10 mm in diameter and 65 mm in length, was prepared, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$. This glass tube of the specific composition is available from Nippon Denki Garasu Kabushiki Kaisha, Produce # L-29F.

3 parts by weight of powdery particles of ruthenium oxide ($RuO_2$) of 0.05 μm in average particle size and 97 parts by weight of a glass powder consisting of:85 wt% of PbO, 10 wt% of $B_2O_3$ and 5 wt% of $SiO_2$ and having an average particle size of 0.1 μm were mixed together and kneaded by the use of a known triple-roll kneader together with terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a

width of 225 μm with the neighboring resistance convolutions spaced a distance of 75 μm.

Two additional internally coated glass tubes identical to the internally coated glass tube discussed above were also prepared. All these three internally coated glass tubes were baked in tunnel furnaces capable of baking them for ten minutes at 440°C, 450°C and 460°C, respectively. The resistance layers on the inner surfaces of the respective glass tubes were about 7 μm in thickness, exhibiting a total resistance of 17.9 GΩ, 15.0 GΩ and 11.8 GΩ. (Sheet resistance values of each of those resistance layers on the respective glass tubes were 3.6 MΩ/□, 3.0 MΩ/□ and 2.4 MΩ/□, and the ratio of Rmax / Rmin, was 1.52 within the sintering temperature from 440 to 460 °C. Both temperature dependent change of the resistance value at a temperature within the range of 0 to 125 °C and temperature coefficient of resistance (TCR), exhibited by all of the layers on the inner surfaces of those glass tubes, were -405 ppm/°C.

Each of the internally coated glass tubes was assembled into the corresponding focusing electrode 15 in the cathode ray tube shown in Fig. 1. To determine the magnitude of change in resistance, 40 KV voltage was applied for one minute to an anode (an end of the focusing electrode 15) of each of the resultant cathode ray tubes. It has been found that the magnitude of change in resistance was -1.0%. Results of experiments are shown in Table 1 (setting forth conditions for preparation) and Table 3 (characteristics) wherein Sample No. 1 shows Example 1.

Table 1

| Sample No. | Substrate | RuO$_2$ Particle Size | Glass Particle Size | Glass Composition (wt.%) | RuO$_2$ / Glass | Sintering Temp. (°C) |
|---|---|---|---|---|---|---|
| 1 | #L-29F | 0.05$\mu$m | 0.1$\mu$m | PbO85, B$_2$O$_3$10, SiO$_2$5 | 3/97 | 440, 450, 460 |
| 2 | #L-29F | 0.1$\mu$m | 0.5$\mu$m | PbO80, B$_2$O$_3$15, SiO$_2$5 | 5/95 | 440, 450, 460 |
| 3 | #BCL | 0.4$\mu$m | 1.5$\mu$m | ZnO56, AlO$_2$O$_3$4, P$_2$O$_5$40 | 15/85 | 490, 500, 510 |
| 4 | #BCL | 0.1$\mu$m | 0.01$\mu$m | ZnO34, Al$_2$O$_3$14, P$_2$O$_5$52 | 7/93 | 490, 500, 510 |
| 5 | #BCL | 0.3$\mu$m | 0.05$\mu$m | ZnO40, Al$_2$O$_3$10, P$_2$O$_5$50 | 5/95 | 490, 500, 510 |
| 6 | #L-29F | 0.1$\mu$m | 2.0$\mu$m | PbO95, B$_2$O$_3$3, SiO$_2$2 | 3/97 | 420, 430, 440 |
| 7 | #L-29F | 0.1$\mu$m | 1.0$\mu$m | PbO67, B$_2$O$_3$18, SiO$_2$15 | 5/95 | 460, 470, 480 |
| 8 | #L-29F | 0.1$\mu$m | 1.3$\mu$m | PbO76, B$_2$O$_3$19, SiO$_2$5 | 6/94 | 450, 460, 470 |
| 9 | #L-29F | 0.4$\mu$m | 0.05$\mu$m | PbO90, ZnO5, B$_2$O$_3$5 | 15/85 | 440, 450, 460 |
| 10 | #L-29F | 0.1$\mu$m | 1.5$\mu$m | PbO69, ZnO20, B$_2$O$_3$11 | 5/95 | 455, 446, 475 |
| 11 | #L-29F | 0.1$\mu$m | 1.5$\mu$m | PbO81, ZnO4, B$_2$O$_3$15 | 5/95 | 442, 452, 462 |
| 12 | #L-29F | 0.05$\mu$m | 2.0$\mu$m | PbO85, ZnO15, B$_2$O$_3$10 | 1/99 | 440, 450, 460 |

EP 0 776 868 B1

Table 2

| Sample No. | Substrate | $RuO_2$ Particle Size | Glass Particle Size | Glass Composition (wt.%) | $RuO_2$ / Glass | Sintering Temp. (°C) |
|---|---|---|---|---|---|---|
| 13 | #BCLF | $0.1\mu m$ | $1.5\mu m$ | $ZnO15, B_2O_310, V_2O_575$ | 5/95 | 490, 500, 510 |
| 14 | #BCL | $0.1\mu m$ | $1.5\mu m$ | $ZnO30, B_2O_35, V_2O_565$ | 5/95 | 500, 510, 520 |
| 15 | #BCL | $0.1\mu m$ | $1.5\mu m$ | $ZnO25, B_2O_325, V_2O_550$ | 5/95 | 510, 520, 530 |
| 16 | #BCL | $0.1\mu m$ | $1.5\mu m$ | $ZnO20, B_2O_320, V_2O_560$ | 5/95 | 500, 510, 520 |
| 18* | #L-29F | $0.1\mu m$ | $3.0\mu m$ | $PbO80, B_2O_315, SiO_25$ | 3/95 | 440, 450, 460 |
| 19* | #L-29F | $0.1\mu m$ | $1.5\mu m$ | $PbO80, B_2O_315, SiO_25$ | 5/95 | 440, 450, 460 |
| 20* | #L-29F | $0.5\mu m$ | $1.5\mu m$ | $PbO80, B_2O_315, SiO_25$ | 2/98 | 440, 450, 460 |
| 21* | #L-29F | $Ru(OH)_3$ | $1.5\mu m$ | $PbO80, B_2O_315, SiO_25$ | 5/95 | 440, 450, 460 |

Sample No. 17 does not exist;

Sample Nos. 18-21: Comparative Examples

Table 3

| Sample No. | Resist. Layer Thick. | R: resistance Value (GΩ) 440, 450, 460 (°C) | Rmax. / Rmin. | TCR1* | Change Rate of R2* |
|---|---|---|---|---|---|
| 1 | $7\mu$m | 17.9, 15.0, 11.8 | 1.52 | -405 ppm/°C | -1.0% |
| 2 | $9\mu$m | 14.9, 11.9, 10.1 | 1.48 | -375 ppm/°C | -1.2% |
| 3 | $10\mu$m | 14.2, 12.2, 9.5 | 1.49 | -395 ppm/°C | -1.5% |
| 4 | $0.5\mu$m | 19.0, 17.1, 12.8 | 1.48 | -430 ppm/°C | -1.2% |
| 5 | $1.0\mu$m | 21.0, 17.5, 14.1 | 1.49 | -445 ppm/°C | -1.0% |
| 6 | $5\mu$m | 15.1, 13.3, 10.5 | 1.44 | -385 ppm/°C | -1.3% |
| 7 | $5\mu$m | 14.5, 12.5, 9.7 | 1.48 | -358 ppm/°C | -1.1% |
| 8 | $5\mu$m | 15.5, 13.5, 10.3 | 1.50 | -402 ppm/°C | -1.0% |
| 9 | $5\mu$m | 12.2, 10.5, 8.1 | 1.51 | -395 ppm/°C | -1.2% |
| 10 | $5\mu$m | 16.4, 14.3, 10.9 | 1.50 | -352 ppm/°C | -1.3% |
| 11 | $5\mu$m | 13.9, 13.1, 9.2 | 1.51 | -348 ppm/°C | -1.2% |
| 12 | $5\mu$m | 19.5, 18.6, 12.8 | 1.52 | -438 ppm/°C | -1.6% |

1* TCR: Temperature coefficient of Resistance
2* Change rate after and before applying 40KV for one minute.

Table 4

| Sample No. | Resist. Layer Thick. | R: resistance Value (GΩ) 440, 450, 460 (°C) | Rmax. /Rmin. | TCR1* | Change Rate of R2* |
|---|---|---|---|---|---|
| 13 | 5μm | 19.1, 16.3, 12.9 | 1.48 | -441 ppm/°C | -1.8% |
| 14 | 5μm | 21.0, 17.8, 14.1 | 1.49 | -435 ppm/°C | -1.5% |
| 15 | 5μm | 20.1, 16.6, 13.8 | 1.46 | -432 ppm/°C | -1.4% |
| 16 | 5μm | 17.9, 15.4, 11.8 | 1.54 | -398 ppm/°C | -1.3% |
| 18* | 5μm | 10.8, 9.5, 8.3 | 1.71 | -350 ppm/°C | -3.9% |
| 19* | 0.4μm | 21.3, 12.5, 9.3 | 2.29 | -452 ppm/°C | -1.8% |
| 20* | 5μm | 17.1, 14.3, 11.2 | 1.53 | -358 ppm/°C | -5.4% |
| 21* | 1.5μm | 45.0, 15.2, 10.3 | 4.37 | -510 ppm/°C | -1.3% |

Sample No. 17 does not exist;
Sample Nos. 18 -21: Comparative Examples
1* TCR: Temperature coefficient of Resistance
2* Change rate after and before applying 40KV for one minute.

EP 0 776 868 B1

Example 2

A glass tube for the focusing electrode 15 to be accommodated within the neck 12 of the glass envelope, 10 mm in diameter and 65 mm in length, was prepared in a similar way to Example 1, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$. This glass tube of the specific composition is available from Nippon Denki Garasu Kabushiki Kaisha, Produce # L-29F.

5 parts by weight of powdery particles of ruthenium oxide ($RuO_2$) of 0.1 μm in average particle size and 95 parts by weight of a glass powder consisting of:80 wt% of PbO, 15 wt% of $B_2O_3$ and 5 wt% of $SiO_2$ and having an average particle size of 0.5 μm were mixed together and were kneaded by the use of a known triple-roll kneader together with terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 12 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 440°C, 450°C and 460°C, respectively. At this time, the resistance layers on the inner surfaces of the respective glass tubes were about 9 μm in thickness, exhibiting the total resistance of 14.9 GΩ, 11.9 GΩ and 10.1 GΩ. (Sheet resistance values of each of those resistance layers on the respective glass tubes were 3.0 MΩ/□, 2.4 MΩ/□ and 2.0 MΩ/□, and a ration of Rmax / Rmin. was 1.48 within the sintering temperature change from 440 to 460 °C. Both temperature dependent change of the resistance value at a temperature within the range of 0 to 125°C and temperature coefficient of resistance (TCR), exhibited by all of the layers on the inner surfaces of those glass tubes, were -375 ppm/°C.

Each of the internally coated glass tubes was assembled into the corresponding focusing electrode 15 in the cathode ray tube shown in Fig. 1. To determine the magnitude of change in resistance, 40 KV voltage was applied for one minute to an anode (an end of the focusing electrode 15) of each of the resultant cathode ray tubes. It has been found that the magnitude of change in resistance was -1.2%. Results of experiments are shown in Table 1 (setting forth conditions for preparation) and Table 3 (characteristics) wherein Sample No. 2 shows Example 2.

Example 3

A glass tube for the focusing electrode 15 to be accommodated within the neck 12 of the glass envelope, 10 mm in diameter and 65 mm in length, was prepared in a similar way to Example 1, from a composition consisting of 72 wt% of $SiO_2$, 3 wt% of BaO, 10.5 wt% of $B_2O_3$, 7.5 wt% of $Na_2O$ and 7 wt% of $Al_2O_3$ and also having a coefficient of thermal expansion of $52 \times 10^{-7}/°C$. This glass tube of the specific composition is available from Nippon Denki Garasu Kabushiki Kaisha, Produce # BCL.

15 parts by weight of powdery particles of ruthenium oxide ($RuO_2$) of 0.4 μm in average particle size and 85 parts by weight of a glass powder consisting of 56 wt% of ZnO, 4 wt% of $Al_2O_3$ and 40 wt% of $P_2O_5$ and having an average particle size of 1.5 μm were mixed together and were kneaded by the use of a known triple-roll kneader together with terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 15 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 490°C, 500°C and 510°C, respectively. At this time, the resistance layers on the inner surfaces of the respective glass tubes were about 10 μm in thickness, exhibiting the total resistance of 14.2 GΩ, 12.2 GΩ and 9.5 GΩ. (Sheet resistance values of each of those resistance layers on the respective glass tubes were 2.8 MΩ/□, 2.4 MΩ/□ and 1.9 MΩ/□, and a ration of Rmax / Rmin. was 1.49 within the sintering temperature change from 490 to 510 °C. Both temperature dependent change of the resistance value at a temperature within the range of 0 to 125°C and temperature coefficient of resistance (TCR), exhibited by all of the layers on the inner surfaces of those glass tubes, were - 395 ppm/°C.

Each of the internally coated glass tubes was assembled into the corresponding focusing electrode 15 in the cathode ray tube shown in Fig. 1. To determine the magnitude of change in resistance, 40 KV voltage was applied for one minute to an anode (an end of the focusing electrode 15) of each of the resultant cathode ray tubes. It has been found that the magnitude of change in resistance was -1.5%. Results of experiments are shown in Table 1 (setting forth conditions for preparation) and Table 3 (characteristics) wherein Sample No. 3 shows Example 3.

Examples 4 to 21

In a similar way to Examples 1 to 3, each of the internally coated glass tubes were prepared except using various kinds of the glass tubes, various composite ratios of $RuO_2$ and glass powder, various particles of $RuO_2$ and the glass powder, various thickness of the resistance layer. Results of experiments are shown in Tables 1 to 4 wherein each of Sample No. shows the corresponding Example No. Please note that Samples No. 18 to 21 are comparative Examples, wherein Sample No. 21 is explained subsequent to Examples 27 to 43.

Apparent from the experiment data shown in Tables 1 to 4, it has been found that smaller than 0.05 μm of $RuO_2$ particles makes the sintering temperature dependency of the resistance value to increase while larger than 0.4 μm of that makes the resistance value changeability after applying 40 KV for one minute to increase.

Further, it has been found that smaller than 0.01 μm of average particle size of glass powder makes their dispersion property to be worse, resulting in gelatinization of the resistance paste which can not be coated while larger than 2.0 μm makes the glass powder and $RuO_2$ to be separated, which causes preparation of ununiform resistance layer.

Furthermore, it has been found that thinner than 0.5 μm of the resistance layer after sintering makes the resistance value to be scattered largely while thicker than 10 μm of that makes accurate helical processing by a diamond bite to be difficult.

The composition of the glass powder should be set within the preferred scope, otherwise the sintering temperature dependency of the resistance value and TCR will be larger.

Example 22

A glass tube for the focusing electrode 15 to be accommodated within the neck 12 of the glass envelope, 10 mm in diameter and 65 mm in length, was prepared, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$. This glass tube of the specific composition is available from Nippon Denki Garasu Kabushiki Kaisha, Produce # L-29F.

3 parts by weight of powdery particles of ruthenium oxide ($RuO_2$) of 0.05 μm in average particle size and 97 parts by weight of a glass powder consisting of 82 wt% of PbO, 5 wt% of $B_2O_3$, 10 wt% of $SiO_2$, 1 wt% of $Al_2O_3$, 2 wt% of ZnO and having an average particle size of 0.1 μm were mixed together and were kneaded by the use of a known triple-roll kneader together with terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 440°C, 450°C and 460°C, respectively. At this time, the resistance layers on the inner surfaces of the respective glass tubes were about 7.5 μm in thickness, exhibiting the total resistance of 17.8 GΩ, 15.3 GΩ and 12.8

G$\Omega$. (Sheet resistance values of each of those resistance layers on the respective glass tubes were 3.6 M$\Omega$/□, 3.1 M$\Omega$/□ and 2.6 M$\Omega$/□, and a ratio of Rmax / Rmin. was 1.39 within the sintering temperature from 440 to 460 °C. Both temperature dependent change of the resistance value at a temperature within the range of 0 to 125 °C and temperature coefficient of resistance (TCR), exhibited by all of the layers on the inner surfaces of those glass tubes, were -345 ppm/°C.

Each of the internally coated glass tubes was assembled into the corresponding focusing electrode 15 in the cathode ray tube shown in Fig. 1. To determine the magnitude of change in resistance, 30 KV voltage was applied for 5,000 hours in a constant temperature oven of 70 °C to an anode (an end of the focusing electrode 15) of each of the resultant cathode ray tubes having a vacuum degree of $133.10^{-7}$ Pa ($10^{-7}$ Torr). It has been found that the magnitude of change in resistance was 1.3% and no change of spot diameter of the cathode ray tube. Results of experiments are shown in Table 5 (setting forth conditions for preparation) and Table 7 (characteristics) wherein Sample No. 22 shows Example 22.

Table 5

| Sample No. | Substrate | $RuO_2$ Particle Size ($\mu$m) | Glass Particle Size ($\mu$m) | Glass Composition (wt.%) | Oxide Size($\mu$m) | Oxide (composition)(wt%) | $RuO_2$/ Glass / Oxide | Sintering Temp. (°C) |
|---|---|---|---|---|---|---|---|---|
| 22 | #L-29F | 0.05 | 0.1 | $PbO82$, $B_2O_35$, $SiO_210$ $Al_2O_31$, $ZnO2$ | - | - | 3/97/0 | 440,450,460 |
| 23 | #L-29F | 0.1 | 0.5 | $PbO92$, $B_2O_33$, $SiO_22$ $Al_2O_31$,$ZnO2$ | 0.05 | $TiO_2$ only | 3/82/15 | 440,450,460 |
| 24 | #BCL | 0.4 | 1.5 | $PbO69$, $B_2O_316$, $SiO_25$ $Al_2O_35$, $ZnO5$ | 0.5 | $ZrO_2$ only | 5/55/40 | 500,510,520 |
| 25 | #SK-C | 0.1 | 0.05 | $PbO90$, $B_2O_32$, $SiO_24$ $Al_2O_33$, $ZnO3$ | 0.1 | $ZrO_2$, $SiO_2$ (66/34) | 13/72/15 | 490,500,510 |
| 26 | #L-29F | 0.1 | 0.5 | $PbO80$, $B_2O_315$, $SiO_25$ | 0.5 | $Al_2O_3$, $ZnO$ (60/40) | 3/72/25 | 460,470,480 |
| 27 | #SK-C | 0.1 | 1.0 | $PbO95$, $B_2O_33$, $SiO_22$ | 1.0 | $Al_2O_3$, $TiO_2$ (50/50) | 3/72/25 | 440,450,460 |
| 28 | #BCL | 0.1 | 1.0 | $PbO76$, $B_2O_319$, $SiO_25$ | 1.0 | $ZrO_2$, $SiO_2$ (50/50) | 3/72/25 | 500,510,520 |
| 29 | #L-29F | 0.1 | 0.01 | $PbO82$, $B_2O_310$, $SiO_25$ | 1.0 | $Al_2O_3$ only | 3/72/25 | 450,460,470 |
| 31 | #L-29F | 0.1 | 2.0 | $PbO85$, $B_2O_36$, $SiO_23$ $Al_2O_32$, $ZnO4$ | - | - | 5/95/0 | 440,450,460 |
| 32 | #L-29F | 0.4 | 0.03 | $PbO75$, $B_2O_316$, $SiO_22$ $Al_2O_32$, $ZnO5$ | - | - | 15/85/0 | 440,450,460 |
| 33 | #L-29F | 0.1 | 1.0 | $PbO75$, $B_2O_316$, $SiO_22$ $Al_2O_32$, $ZnO5$ | 2.0 | $Al_2O_3$ only | 5/75/20 | 460,470,480 |
| 34 | #L-29F | 0.1 | 1.0 | $PbO75$, $B_2O_316$, $SiO_22$ $Al_2O_32$, $ZnO5$ | 1.0 | $SiO_2$ only | 5/75/20 | 460,470,480 |

EP 0 776 868 B1

Table 6

| Sample No. | Substrate | RuO$_2$ Particle Size ($\mu$m) | Glass Particle Size ($\mu$m) | Glass Composition (wt. %) | Oxide Size ($\mu$m) | Oxide (compo.) (wt. %) | RuO$_2$/ Glass/ Oxide | Sintering Temp. (°C) |
|---|---|---|---|---|---|---|---|---|
| 35 | #L-29F | 0.1 | 1.0 | PbO75, B$_2$O$_3$16, SiO$_2$2 AlO$_3$2, ZnO5 | 0.5 | ZrO$_2$ only | 5/75/20 | 460,470,480 |
| 36 | #BCL | 0.1 | 1.5 | PbO71, B$_2$O$_3$17, SiO$_2$2 Al$_2$O$_3$1, ZnO3 | 0.5 | Al$_2$O$_3$, ZnO | 5/60/35 | 500,510,520 |
| 37 | #BCL | 0.1 | 1.5 | PbO71, B$_2$O$_3$17, SiO$_2$2 Al$_2$O$_3$1, ZnO3 | 0.5 | ZrO$_2$, TiO$_2$ (66/40) | 5/60/35 | 500,510,520 |
| 38 | #BCL | 0.1 | 1.5 | PbO71, B$_2$O$_3$17, SiO$_2$2 Al$_2$O$_3$1, ZnO3 | 0.5 | Al$_2$O$_3$, TiO$_2$ (50/50) | 5/60/35 | 500,510,520 |
| 39 | #BCL | 0.1 | 1.5 | PbO71, B$_2$O$_3$17, SiO$_2$2 Al$_2$O$_3$1, ZnO3 | 0.5 | ZnO, SiO$_2$ (50/50) | 5/60/35 | 500,510,520 |
| 40 | #SK-C | 0.1 | 1.5 | PbO71, B$_2$O$_3$17, SiO$_2$2 Al$_2$O$_3$1, ZnO3 | 0.5 | Al$_2$O$_3$, ZrO$_2$ (40/60) | 3/82/15 | 480,490,500 |
| 43* | #L-29F | Ru(OH)$_3$ | 0.5 | PbO75, B$_2$O$_3$16, SiO$_2$2 Al$_2$O$_3$2, ZnO5 | - | - | 5/95/0 | 440,450,460 |

Samples Nos. 30, 41 and 42 do not exist;
Sample NO. 43: Comparative Example

EP 0 776 868 B1

Table 7

| Sample No. | R Value (GΩ) 440, 450, 460 (°C) | Rmax. / Rmin. | TCR | Change rate of R1[*] | Spot Size 2[*] |
|---|---|---|---|---|---|
| 22 | 17.8, 15.3, 12.8 | 1.39 | -345 ppm/°C | 1.3% | No Changed |
| 23 | 14.1, 12.0, 11.2 | 1.26 | -315 ppm/°C | 0.8% | " |
| 24 | 13.6, 12.6, 10.8 | 1.26 | -305 ppm/°C | 1.5% | " |
| 25 | 6.5, 6.1, 5.0 | 1.30 | -295 ppm/°C | 0.7% | " |
| 26 | 13.5, 12.0, 10.4 | 1.30 | -335 ppm/°C | 1.3% | " |
| 27 | 12.4, 10.8, 9.2 | 1.35 | -328 ppm/°C | 1.2% | " |
| 28 | 12.0, 10.3, 8.7 | 1.38 | -330 ppm/°C | 1.4% | " |
| 29 | 17.9, 15.3, 12.8 | 1.40 | -345 ppm/°C | 1.4% | " |
| 31 | 17.1, 14.8, 12.4 | 1.38 | -340 ppm/°C | 1.2% | " |
| 32 | 7.6, 6.6, 5.5 | 1.37 | -305 ppm/°C | 1.7% | " |
| 33 | 10.9, 9.8, 8.7 | 1.25 | -315 ppm/°C | 0.7% | " |
| 34 | 11.0, 9.9, 8.7 | 1.26 | -319 ppm/°C | 0.9% | " |

1[*]: after applying 30KV for 5000 hours in an over of constant temp. (70°C)
2[*]: after 5000 hours

EP 0 776 868 B1

Table 8

| Sample No. | R Value (GΩ) 440, 450, 460 (°C) | Rmax. / Rmin. | TCR | Change rate of R1[*] | Spot Size 2[*] |
|---|---|---|---|---|---|
| 35 | 12.2, 10.9, 9.5 | 1.28 | -320 ppm/°C | 0.8% | No Changed |
| 36 | 15.8, 14.2, 12.5 | 1.26 | -323 ppm/°C | 0.7% | " |
| 37 | 14.5, 13.0, 11.4 | 1.27 | -330 ppm/°C | 0.8% | " |
| 38 | 14.9, 19.0, 11.6 | 1.29 | -325 ppm/°C | 0.8% | " |
| 39 | 13.5, 12.2, 10.8 | 1.25 | 312 ppm/°C | 0.9% | " |
| 40 | 10.8, 9.7, 8.6 | 1.26 | -301 ppm/°C | 0.6% | " |
| 43* | 45.0, 15.2, 10.3 | 4.37 | -510 ppm/°C | 4.8% | " |

Samples Nos. 30, 41 and 42 do not exist;

Sample No. 43: Comparative Example

1[*]: after applying 30KV for 5000 hours in an over of constant temp.(70 °C)

2[*]: after 5000 hours

Example 23

A glass tube for the focusing electrode 15 to be accommodated within the neck 12 of the glass envelope, 10 mm in diameter and 65 mm in length, was prepared in a similar way to Example 22, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$. This glass tube of the specific composition is available from Nippon Denki Garasu Kabushiki Kaisha, Produce # L-29F.

3 parts by weight of powdery particles of ruthenium oxide ($RuO_2$) of 0.1 μm in average particle size, 82 parts by weight of a glass powder consisting of 92 wt% of PbO, 3 wt% of $B_2O_3$, 2 wt% of $SiO_2$, 1 wt% of $Al_2O_3$ and 2 wt.% of ZnO and having an average particle size of 0.5 μm and 15 parts by weight of the metal oxide ($TiO_2$) were mixed together and were kneaded by the use of a known triple-roll kneader together with terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 440°C, 450°C and 460°C, respectively. At this time, the resistance layers on the inner surfaces of the respective glass tubes were about 9 μm in thickness, exhibiting the total resistance of 14.1 GΩ, 12.0 GΩ and 11.2 GΩ. (Sheet resistance values of each of those resistance layers on the respective glass tubes were 2.8 MΩ/□, 2.6 MΩ/□ and 2.4 MΩ/□, and a ration of Rmax / Rmin. was 1.26 within the sintering temperature change from 440 to 460 °C. Both temperature dependent change of the resistance value at a temperature within the range of 0 to 125°C and temperature coefficient of resistance (TCR), exhibited by all of the layers on the inner surfaces of those glass tubes, were -315 ppm/°C.

Each of the internally coated glass tubes was assembled into the corresponding focusing electrode 15 in the cathode ray tube shown in Fig. 1. To determine the magnitude of change in resistance, 30 KV voltage was applied for 5,000 hours in a constant temperature oven of 70 °C to an anode (an end of the focusing electrode 15) of each of the resultant cathode ray tubes having a vacuum degree of $133.10^{-7}$ Pa ($10^{-7}$ Torr). It has been found that the magnitude of change in resistance was 0.8 % and no change of spot diameter of the cathode ray tube. Results of experiments are shown in Table 5 (setting forth conditions for preparation) and Table 8 (characteristics) wherein Sample No. 23 shows Example 23.

Example 24

A glass tube for the focusing electrode 15 to be accommodated within the neck 12 of the glass envelope, 10 mm in diameter and 65 mm in length, was prepared in a similar way to Example 22, from a composition consisting of 72 wt% of $SiO_2$, 3 wt% of BaO, 10.5 wt% of $B_2O_3$, 7.5 wt% of $Na_2O$ and 7 wt% of $Al_2O_3$ and also having a coefficient of thermal expansion of $52 \times 10^{-7}/°C$. This glass tube of the specific composition is available from Nippon Denki Garasu Kabushiki Kaisha, Produce # BCL.

5 parts by weight of powdery particles of ruthenium oxide ($RuO_2$) of 0.4 μm in average particle size and 55 parts by weight of a glass powder consisting of 69 wt% of PbO, 16 wt% of $B_2O_3$, 5 wt% of $SiO_2$, 5 wt% of $Al_2O_3$ and 5 wt% of ZnO and having an average particle size of 1.5 μm and 40 parts by weight of metal oxide ($ZrO_2$) having a particle size of 0.5 μm were mixed together and were kneaded by the use of a known triple-roll kneader together with a terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 500°C, 510°C and 520°C; respectively. At this time, the resistance layers on the inner surfaces of the respective glass tubes were about 7.8 μm in thickness, exhibiting the total resistance of 13.6 GΩ, 12.6 GΩ and 10.8 GΩ (Sheet resistance values of each of those resistance layers on the respective glass tubes were 2.7 MΩ/□, 2.5 MΩ/□ and 2.1 MΩ/□, and a ration of Rmax / Rmin. was 1.26 within the sintering temperature change from 500 to 520 °C. Both temperature dependent change of the resistance value at a temperature within the range of 0 to 125°C and temperature coefficient of resistance (TCR), exhibited by all of the layers on the inner surfaces of those glass tubes, were - 305 ppm/°C.

Each of the internally coated glass tubes was assembled into the corresponding focusing electrode 15 in the cathode ray tube shown in Fig. 1. To determine the magnitude of change in resistance, 30 KV voltage was applied for 5,000 hours in a constant temperature oven of 70 °C to an anode (an end of the focusing electrode 15) of each of the resultant cathode ray tubes having a vacuum degree of $133.10^{-7}$ Pa ($10^{-7}$ Torr). It has been found that the magnitude of change in resistance was 1.5 % and no change of spot diameter of the cathode ray tube. Results of experiments are shown in Table 5 (setting forth conditions for preparation) and Table 7 (characteristics) wherein Sample No. 24 shows Example 24.

Example 25

A glass tube for the focusing electrode 15 to be accommodated within the neck 12 of the glass envelope, 10 mm in diameter and 65 mm in length, was prepared in a similar way to Example 22, from a composition consisting of 70.3 wt% of $SiO_2$, 1.2 wt% of $B_2O_3$, 17.8 wt% of $Na_2O$, 2 wt% of $Al_2O_3$, 2.8 wt% of MgO and 5.9 wt% of CaO and also having a coefficient of thermal expansion of $98.5 \times 10^{-7}/°C$. This glass tube of the specific composition is available from Nippon Denki Garasu Kabushiki Kaisha, Produce # SK-C.

13 parts by weight of powdery particles of ruthenium oxide ($RuO_2$) of 0.1 μm in average particle size and 72 parts by weight of a glass powder consisting of 90 wt% of PbO, 2 wt% of $B_2O_3$, 4 wt% of $SiO_2$, 3 wt% of $Al_2O_3$ and 3 wt% of ZnO and having an average particle size of 0.05 μm and 15 parts by weight of mixed metal oxides ($ZrO_2$ and $SiO_2$; 66:34) having each particle size of 0.1 μm were mixed together and were kneaded by the use of a known triple-roll kneader together with a terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 490°C, 500°C and 510°C, respectively. At this time, the resistance layers on the inner surfaces of the respective glass tubes were about 8.0 μm in thickness, exhibiting the total resistance of 6.5 GΩ, 5.1 GΩ and 5.0 GΩ (Sheet resistance values of each of those resistance layers on the respective glass tubes were 1.3 MΩ/□, 1.2 MΩ/□ and 1.0 MΩ/□, and a ration of Rmax / Rmin. was 1.30 within the sintering temperature change from 490 to 510 °C. Both temperature dependent change of the resistance value at a temperature within the range of 0 to 125°C and temperature coefficient of resistance (TCR), exhibited by all of the layers on the inner surfaces of those glass tubes, were - 295 ppm/°C.

Each of the internally coated glass tubes was assembled into the corresponding focusing electrode 15 in the cathode ray tube shown in Fig. 1. To determine the magnitude of change in resistance, 30 KV voltage was applied for 5,000 hours in a constant temperature oven of 70 °C to an anode (an end of the focusing electrode 15) of each of the resultant cathode ray tubes having a vacuum degree of $133.10^{-7}$ Pa ($10^{-7}$ Torr). It has been found that the magnitude of change in resistance was 0.7 % and no change of spot diameter of the cathode ray tube. Results of experiments are shown in Table 5 (setting forth conditions for preparation) and Table 7 (characteristics) wherein Sample No. 25 shows Example 25.

Example 26

A glass tube for the focusing electrode 15 to be accommodated within the neck 12 of the glass envelope, 10 mm in diameter and 65 mm in length, was prepared in a similar way to Example 22, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$. This glass tube of the specific composition is available from Nippon Denki Garasu Kabushiki Kaisha, Produce # L-29F.

3 parts by weight of powdery particles of ruthenium oxide ($RuO_2$) of 0.1 μm in average particle size and 72 parts by weight of a glass powder consisting of 80 wt% of PbO, 15 wt% of $B_2O_3$, 5 wt% of $SiO_2$ and having an average particle size of 0.5 μm and 25 parts by weight of mixed metal oxides ($Al_2O_3$ and ZnO; 60:40) having each particle size of 0.5 μm were mixed together and were kneaded by the use of a known triple-roll kneader together with a terpineol dissolved with 10% ethylcellulose as an organic binder, to thereby provide a resistance paste. The resistance paste so obtained is, prior to application to an inner surface of the glass tube, added with a toluene solvent to adjust its viscosity to 50 dPa.s (poises) per centimeter.

The viscosity-adjusted resistance paste was applied to the inner surface of the glass tube by immersing the glass tube in a bath containing the viscosity-adjusted resistance paste and then pulling it out of the bath. The glass tube having the inner surface coated with the resistance paste was then dried at 80°C to complete a resistance layer of about 10 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 460°C, 470°C and 480°C, respectively. At this time, the resistance layers on the inner surfaces of the respective glass tubes were about 8.0 μm in thickness, exhibiting the total resistance of 13.5 GΩ, 12.0 GΩ and 10.4 GΩ (Sheet resistance values of each of those resistance layers on the respective glass tubes were 2.7 MΩ/□, 2.4 MΩ/□ and 2.1 MΩ/□, and a ration of Rmax / Rmin. was 1.30 within the sintering temperature change from 490 to 510 °C. Both temperature dependent change of the resistance value at a temperature within the range of 0 to 125°C and temperature coefficient of resistance (TCR), exhibited by all of the layers on the inner surfaces of those glass tubes, were - 335 ppm/°C.

Each of the internally coated glass tubes was assembled into the corresponding focusing electrode 15 in the cathode ray tube shown in Fig. 1. To determine the magnitude of change in resistance, 30 KV voltage was applied for 5,000 hours in a constant temperature oven of 70 °C to an anode (an end of the focusing electrode 15) of each of the resultant cathode ray tubes having a vacuum degree of $133.10^{-7}$ Pa ($10^{-7}$ Torr). It has been found that the magnitude of change in resistance was 1.3 % and no change of spot diameter of the cathode ray tube. Results of experiments are shown in Table 5 (setting forth conditions for preparation) and Table 7 (characteristics) wherein Sample No. 26 shows Example 26.

Examples 27 to 43

In a similar way to Examples 22 to 26, each of the internally coated glass tubes were prepared except using various kinds of the glass tubes, various composite ratios of $RuO_2$, glass powder and metal oxide, various particles of $RuO_2$, the glass powder and the metal oxide, various thickness of the resistance layer. Results of experiments are shown in Tables 5 to 8 wherein each of Sample No. shows a corresponding Example No. Please note that Samples No. 41 to 43 are comparative Examples.

Apparent from the experiment data shown in Tables 5 to 8, it has been found that smaller than 0.05 μm of $RuO_2$ particles makes the sintering temperature dependency of the resistance value to increase while larger than 0.4 μm of that makes the resistance value changeability after applying 30 KV for 5000 hours to increase. That is, resistance change rate of more than 2% changes the spot diameter. The PbO content in the glass composition is preferably in a range of 69 to 92 wt %, because less than 69 wt% makes the sintering temperature to become over 520 °C, so that it is impossible to form the resistance layer on the glass tube of # LF-29 and #BCL. On the other hand, more than 92 wt% does not provide a stable glass composition. If the other element content of the glass powder is out of the scope, the change of the resistance value after applying 30 KV for 5,000 hours becomes large (not preferable).

Further, it has been found that smaller than 0.01 μm of average particle size of the glass powder makes their dispersion property to be worse, resulting in gelatinization of the resistance paste which can not be coated while larger than 2.0 μm makes the glass powder and $RuO_2$ to be separated with ease, which causes preparation of ununiform resistance layer.

Furthermore, the metal oxide may be provided with an insulating and heat resistant property, which prevent the metal oxide from melting into the glass and may be preferably one or mixture of more than two selected from the group consisting of $TiO_2$, $ZrO_2$, $SiO_2$ and $Al_2O_3$.

COMPARATIVE EXAMPLE

A glass tube for the focusing electrode 15 to be accommodated within the neck 12 of the glass envelope, 10 mm in diameter and 65 mm in length, was prepared in a similar way to Example 2, from a composition consisting of 60 wt% of $SiO_2$, 28 wt% of PbO, 8 wt% of $Na_2O$, 3 wt% of $K_2O$ and 1 wt% of $Al_2O_3$ and also having a coefficient of thermal expansion of $94 \times 10^{-7}/°C$ This glass tube of the specific composition is available from Nippon Denki Garasu Kabushiki Kaisha, Produce # L-29F.

5 parts by weight of powdery particles of ruthenium chloride ($RuCl_3$) and 95 parts by weight of a glass powder consisting of 80 wt% of PbO, 15 wt% of $B_2O_3$, 5 wt% of $SiO_2$ and having an average particle size of 1.5 μm were mixed together with water. To a resulting water mixture, ammonia was added to precipitate ruthenium hydroxide ($Ru(OH)_3$). The precipitate was dried and transferred to a ball mill. The precipitate was kneaded with isopropanol and ammonia, to thereby provide a suspension. The suspension so obtained was applied to the inner surface of the glass tube by immersing the glass tube in a bath containing the suspension and then pulling it out of the bath. The glass tube having the inner surface coated with the resistance liquid was then dried at 80°C to complete a resistance layer of about 7 μm in thickness on the inner surface of the glass tube.

Using a diamond bite, the inner surface of the glass tube where the resistance layer was formed is subsequently ground spirally to form a coiled or helical resistance pattern having a plurality of resistance convolutions of a pitch of 300 μm, 3.5 m in total length exclusive of an intermediate tap, each of said resistance convolutions having a width of 225 μm with the neighboring resistance convolutions spaced a distance of 75 μm.

Two additional internally coated glass tubes identical to the internally coated glass tube discussed above were also prepared. All these three internally coated glass tubes were baked tunnel furnaces capable of baking them for ten minutes at 440°C, 450°C and 460°C, respectively. At this time, the resistance layers on the inner surfaces of the respective glass tubes were about 7.0 μm in thickness, exhibiting the total resistance of 45.0 GΩ, 15.2 GΩ and 10.3 GΩ (Sheet resistance values of each of those resistance layers on the respective glass tubes were 9.1 MΩ/□, 3.0 MΩ/□ and 2.1 MΩ/□, and a ration of Rmax / Rmin. was 4.37 within the sintering temperature change from 440 to 460 °C. Both temperature dependent change of the resistance value at a temperature within the range of 0 to 125°C and temperature coefficient of resistance (TCR), exhibited by all of the layers on the inner surfaces of those glass tubes, were - 510 ppm/°C.

Each of the internally coated glass tubes was assembled into the corresponding focuding electrode 15 in the cathode ray tube shown in Fig. 1. To determine the magnitude of change in resistance, 40 KV voltage was applied for one minute to an anode (an end of the focusing electrode 15) of each of the resultant cathode ray tubes. It has been found that the magnitude of change in resistance was -1.3%. Results of experiments are shown in Table 1 (setting forth conditions for preparation) and Table 3 (characteristics) wherein Sample No. 21 shows this Comparative Example.

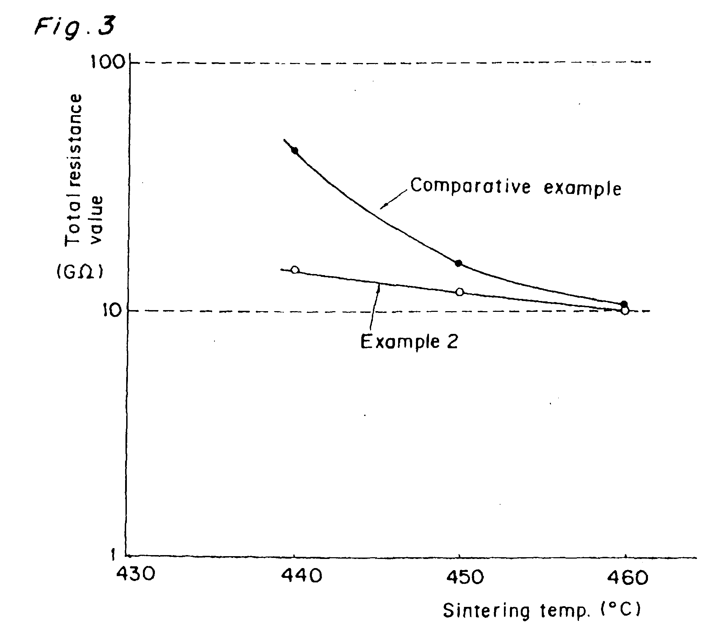

Fig. 3 is a comparative graph showing the sintenng temperature dependency of the present invnetion and the conventional method.

Stated as the above, according to the present invention, there can be provided a much reliable helical resistance layer on the cathode ray tube having a less sintering temperature dependency of the resistance value and a less resistance load characteristic change on applying a high voltage (30KV in a constant temperature oven of 70 °C) as well as a lens temperature characteristic change.

**Claims**

1.    A method of preparing a resistor for a cathode ray tube which comprises steps of

preparing a liquid coating material containing 1 to 15 parts by weight of $RuO_2$ powder having an average particle size of 0.05 to 0.4 μm and 85 to 99 parts by weight of a glass powder having an average particle size of 0.01 to 2,0 μm,
applying the liquid coating material on an inner face of a glass tube to form a resistance layer,
processing the resistance layer in a helical shape,
sintering the helical resistance layer to obtain a sheet resistivity of at least 1 MΩ/□, wherein the resistance layer has a thickness of from 0.5 to 10 μm after sintering.

2.    The method of claim 1, wherein the glass powder comprises 67 to 95 percent by weight of PbO, 2 to 15 percent

by weight of $SiO_2$ and 3 to 19 percent by weight of $B_2O_3$.

3. The method of claim 1, wherein the glass powder comprises 69 to 90 percent by weight of PbO, 2 to 20 percent by weight of ZnO and 5 to 15 percent by weight of $B_2O_3$.

4. The method of claim 1, wherein the glass powder comprises 40 to 52 percent by weight of $P_2O_5$, 34 to 56 percent by weight of ZnO and 4 to 14 percent by weight of $Al_2O_3$.

5. The method of claim 1, wherein the glass powder comprises 15 to 30 percent by weight of ZnO, 5 to 25 percent by weight of $B_2O_3$ and 50 to 75 percent by weight of $V_2O_5$.

6. The method of claim 1, wherein the glass powder comprises 69 to 92 percent by weight of PbO, 2 to 10 percent by weight of $SiO_2$, 2 to 20 percent by weight of $B_2O_3$, 1 to 5 percent by weight of $Al_2O_3$, and 2 to 5 percent by weight of ZnO.

7. A method of preparing a resistor for a cathode ray tube which comprises steps of

preparing a liquid coating material containing 3 to 13 parts by weight of $RuO_2$ powder having an average particle size of 0.05 to 0.4 µm, 69 to 92 parts by weight of a glass powder having an average particle size of 0.01 to 2.0 µm and 15 to 40 parts by weight of metal oxide powder having an average particle size of 0.05 to 2.0 µm applying the liquid coating material on an inner face of a glass tube to form a resistance layer, processing the resistance layer in a helical shape, sintering the helical resistance layer to obtain a sheet resistivity of at least 1 MΩ/□, wherein the resistance layer has a thickness of from 0.5 to 10 µm after sintering.

8. The method of claim 7, wherein the glass powder comprises 69 to 92 percent by weight of PbO, 2 to 10 percent by weight of $SiO_2$, 2 to 20 percent by weight of $B_2O_3$, 1 to 5 percent by weight of $Al_2O_3$, and 2 to 5 percent by weight of ZnO.

9. The method of claim 7, wherein the glass powder comprises 67 to 95 percent by weight of PbO, 2 to 15 percent by weight of $SiO_2$ and 3 to 19 percent by weight of $B_2O_3$.

10. The method of anyone of claims 7 to 9, wherein the metal oxide powder is at least one selected from the group consisting of $TiO_2$, $ZrO_2$, ZnO, $SiO_2$ and $Al_2O_3$.

11. The method of any one of the preceding claims, wherein the glass tube has a glass transition point Tg of 600 °C or less.

**Patentansprüche**

1. Verfahren zur Herstellung eines Widerstandes für eine Kathodenstrahlröhre mit den Schritten, daß man

ein flüssiges Beschichtungsmaterial herstellt, welches 1 bis 15 Gewichtsteile $RuO_2$-Pulver mit einer mittleren Teilchengröße von 0,05 bis 0,4 µm und 85 bis 99 Gewichtsteile eines Glaspulvers mit einer mittleren Teilchengröße von 0,01 bis 2,0 µm enthält, zur Bildung einer Widerstandsschicht das flüssige Beschichtungsmaterial auf eine Innenfläche einer Glasröhre aufträgt, die Widerstandsschicht bearbeitet, so daß sie eine helixartige Gestalt hat, die helixartige Widerstandsschicht sintert, um einen Schichtwiderstand von mindestens 1 MΩ/□ zu erhalten, wobei die Widerstandsschicht nach dem Sintern eine Dicke von 0,5 bis 10 µm aufweist.

2. Verfahren nach Anspruch 1, bei dem das Glaspulver 67 bis 95 Gew.-% PbO, 2 bis 15 Gew.-% $SiO_2$ und 3 bis 19 Gew.-% $B_2O_3$ enthält.

3. Verfahren nach Anspruch 1, bei dem das Glaspulver 69 bis 90 Gew.-% PbO, 2 bis 20 Gew.-% ZnO und 5 bis 15 Gew.-% $B_2O_3$ enthält.

4. Verfahren nach Anspruch 1, bei dem das Glaspulver 40 bis 52 Gew.-% $P_2O_5$, 34 bis 56 Gew.-% ZnO und 4 bis 14 Gew.-% $Al_2O_3$ enthält.

5. Verfahren nach Anspruch 1, bei dem das Glaspulver 15 bis 30 Gew.-% ZnO, 5 bis 25 Gew.-% $B_2O_3$ und 50 bis 75 Gew.-% $V_2O_5$ enthält.

6. Verfahren nach Anspruch 1, bei dem das Glaspulver 69 bis 92 Gew.-% PbO, 2 bis 10 Gew.-% $SiO_2$, 2 bis 20 Gew.-% $B_2O_3$, 1 bis 5 Gew.-% $Al_2O_3$ und 2 bis 5 Gew.-% ZnO enthält.

7. Verfahren zur Herstellung eines Widerstandes für eine Kathodenstrahlröhre mit den Schritten, daß man

ein flüssiges Beschichtungsmaterial herstellt, welches 3 bis 13 Gewichtsteile $RuO_2$-Pulver mit einer mittleren Teilchengröße von 0,05 bis 0,4 µm, 69 bis 92 Gewichtsteile eines Glaspulvers mit einer mittleren Teilchengröße von 0,01 bis 2,0 µm und 15 bis 40 Gewichtsteile eines Metalloxidpulvers mit einem mittleren Teilchendurchmesser von 0,05 bis 2,0 µm enthält,
zur Bildung einer Widerstandsschicht das flüssige Beschichtungsmaterial auf eine Innenfläche einer Glasröhre aufträgt,
die Widerstandsschicht bearbeitet, so daß sie eine helixartige Gestalt hat, die helixartige Widerstandsschicht sintert, um einen Schichtwiderstand von mindestens 1 MΩ/□ zu erhalten, wobei die Widerstandsschicht nach dem Sintern eine Dicke von 0,5 bis 10 µm aufweist.

8. Verfahren nach Anspruch 7, bei dem das Glaspulver 69 bis 92 Gew.-% PbO, 2 bis 10 Gew.-% $SiO_2$, 2 bis 20 Gew.-% $B_2O_3$, 1 bis 5 Gew.-% $Al_2O_3$ und 2 bis 5 Gew.-% ZnO enthält.

9. Verfahren nach Anspruch 7, bei dem das Glaspulver 67 bis 95 Gew.-% PbO, 2 bis 15 Gew.-% $SiO_2$ und 3 bis 19 Gew.-% $B_2O_3$ enthält.

10. Verfahren nach einem der Ansprüche 7 bis 9, bei dem das Metalloxidpulver mindestens ein Vertreter ist ausgewählt aus der Gruppe bestehend aus $TiO_2$, $ZrO_2$, ZnO, $SiO_2$ und $Al_2O_3$.

11. Verfahren nach einem der vorhergehenden Ansprüche, bei dem die Glasröhre einen Glasübergangspunkt Tg von 600 °C oder weniger hat.

**Revendications**

1. Procédé de préparation d'une résistance destinée à un tube à rayons cathodiques qui comprend les étapes suivantes

préparer un matériau de revêtement liquide contenant 1 à 15 parties en poids de poudre de $RuO_2$ présentant une granulométrie moyenne de 0,05 à 0,4 µm et 85 à 99 parties en poids d'une poudre de verre présentant une granulométrie moyenne de 0,01 à 2,0 µm,
appliquer le matériau de revêtement liquide sur une face interne d'un tube de verre afin de former une couche de résistance,
traiter la couche de résistance selon une forme hélicoïdale,
fritter la couche de résistance électrique afin d'obtenir une résistivité en couche d'au moins 1 MΩ par carré, dans laquelle la couche de résistance présente une épaisseur allant de 0,5 à 10 µm après frittage.

2. Procédé selon la revendication 1, dans lequel la poudre de verre comprend 67 à 95 pour-cent en poids de PbO, 2 à 15 pour-cent en poids de $SiO_2$ et 3 à 19 pour-cent en poids de $B_2O_3$.

3. Procédé selon la revendication 1, dans lequel la poudre de verre comprend 69 à 90 pour-cent en poids de PbO, 2 à 20 pour-cent en poids de ZnO et 5 à 15 pour-cent en poids de $B_2O_3$.

4. Procédé selon la revendication 1, dans lequel la poudre de verre comprend 40 à 52 pour-cent en poids de $P_2O_5$, 34 à 56 pour-cent en poids de ZnO et 4 à 14 pour-cent en poids de $Al_2O_3$.

5. Procédé selon la revendication 1, dans lequel la poudre de verre comprend 15 à 30 pour-cent en poids de ZnO, 5 à 25 pour-cent en poids de $B_2O_3$ et 50 à 75 pour-cent en poids de $V_2O_5$.

6. Procédé selon la revendication 1, dans lequel la poudre de verre comprend 69 à 92 pour-cent en poids de PbO, 2 à 10 pour-cent en poids de $SiO_2$, 2 à 20 pour-cent en poids de $B_2O_3$, 1 à 5 pour-cent en poids de $Al_2O_3$ et 2 à 5 pour-cent en poids de ZnO.

7. Procédé de préparation d'une résistance destinée à un tube à rayons cathodiques qui comprend les étapes suivantes

   préparer un matériau de revêtement liquide contenant 3 à 13 parties en poids de poudre de $RuO_2$ présentent une granulométrie moyenne de 0,05 à 0,4 µm, 69 à 92 parties en poids d'une poudre de verre présentant une granulométrie moyenne de 0,01 à 2,0 µm et 15 à 40 parties en poids d'une poudre d'oxyde métallique présentant une granulométrie moyenne de 0,05 à 2,0 µm
   appliquer le matériau de revêtement liquide sur une face interne d'un tube de verre afin de former une couche de résistance,
   traiter la couche de résistance selon une forme hélicoïdale,
   fritter la couche de résistance hélicoïdale afin d'obtenir une résistivité en couche d'au moins 1 MΩ par carré, dans laquelle la couche de résistance présente une épaisseur allant de 0,5 à 10 µm après frittage.

8. Procédé selon la revendication 7, dans lequel la poudre de verre comprend 69 à 92 pour-cent en poids de PbO, 2 à 15 pour-cent en poids de $SiO_2$, 2 à 20 pour-cent en poids de $B_2O_3$, 1 à 5 pour-cent en poids de $Al_2O_3$ et 2 à 5 pour-cent en poids de ZnO.

9. Procédé selon la revendication 7, dans lequel la poudre de verre comprend 67 à 95 pour-cent en poids de PbO, 2 à 10 pour-cent de $SiO_2$, et 3 à 19 pour-cent en poids de $B_2O_3$.

10. Procédé selon l'une quelconque des revendications 7 à 9, dans lequel la poudre d'oxyde métallique est au moins l'une sélectionnée parmi le groupe constitué de $TiO_2$, $ZrO_2$, ZnO, $SiO_2$ et $Al_2O_3$.

11. Procédé selon l'une quelconque des revendications précédentes, dans lequel le tube de verre présente un point de transition vitreuse Tg de 600°C ou moins.

Fig. 1

EP 0 776 868 B1

Fig. 2

Fig. 3